# EUROPÄISCHE PATENTANMELDUNG

(11) **EP 1 422 535 A1**
(43) Veröffentlichungstag der Anmeldung: **26.05.2004**
(21) Anmeldenummer: 03104216.1
(22) Anmeldetag: 17.11.2003
(51) Int. Cl.: G01S 17/36, G01S 17/32

(54) **Laserdistanzhandmessgerät mit Extremwertmessverfahren**

(30) Priorität: 19.11.2002 DE 10253669
(71) Anmelder: HILTI Aktiengesellschaft, 9494 Schaan (LI)
(72) Erfinder: Gogolla, Torsten, 9494, Schaan (LI); Kuhlmann, Dietmar Fritz Karl, 9434, Au (CH); Winter, Andreas, 6800, Feldkrich (AT)
(74) Vertreter: Wildi, Roland

(57) **Zusammenfassung**

Laserdistanzhandmessgerät (1) und Extremwertmessverfahren, wobei in einem ersten Schritt ein Eingabemittel (2) betätigt wird, das eine Messfolge auslöst, während welcher in einem zweiten Schritt vom Laserdistanzhandmessgerät (1) ausgelöste Einzelmessungen von Distanzen erfolgen und in einem dritten Schritt vom Laserdistanzhandmessgerät (1) aus den Einzelmessungen zumindest ein Maximalwert (4) bzw. Minimalwert (4) bezüglich der Messfolge bestimmt wird, wobei vom Laserdistanzhandmessgerät (1) aus zumindest einem Minimalwert (5) und zumindest einem Maximalwert (5) eine Extremwertdifferenz (6) bezüglich der Messfolge berechnet wird.

## Beschreibung

Die Erfindung bezeichnet ein Laserdistanzhandmessgerät mit einem Extremwertmessverfahren, insbesondere eines Baulaserdistanzmessers.

Im Baugewerbe ist im Entfernungsbereich bis zu einigen 100m die exakte Bestimmung der Distanz mit einer Genauigkeit von wenigen mm erforderlich. Die dazu geeignet ausgebildeten Laserdistanzhandmessgeräte, auf welche sich diese Erfindung bezieht, verwenden zur Distanzmessung ein Phasenlaufzeitdifferenzmessverfahren eines modulierten sichtbaren Laserstrahls.

Neben der direkten Messung der Distanz von einem Referenzpunkt, an welchem das Laserdistanzhandmessgerät positioniert wird, bis zu einem optischen Messpunkt sind durch mit einfachen mathematischen Algorithmen kombinierte Einzelmessungen komplexere Messaufgaben mit dem Laserdistanzhandmessgerät lösbar, bspw. die Messung eines rechteckigen Flächeninhalts oder eines quaderförmigen Rauminhalts. Insbesondere im Baugewerbe stellt die Messung der exakten Lage von Objekten in Form von Leitungen oder Verkleidungen relativ zu Flächen in Form von Wänden oder Decken eine wesentliche Grundmessaufgabe dar.

Nach der DE19836812A1 ist ein Laserdistanzhandmessgerät mit automatischer Bestimmung eines durch leichte Fluktuation der Winkellage des handgehaltenen Laserdistanzhandmessgerätes entstehenden Minimalwerts oder Maximalwerts einer Messfolge zu verschiedenen Messpunkten längs eines Messpfades und deren Anzeige bzw. Weiterverarbeitung in Spezialfunktionen bspw. zur Bestimmung der normalen Distanz zu einer Ebene oder der diagonalen Distanz zu einer Ecke bekannt. Die Messung der Lage von Objekten zu Flächen ist nur mittelbar durch einen bewussten, manuell vom Nutzer abgearbeiteten Algorithmus mit den Ergebnissen mehrerer Einzelmessungen möglich, insbesondere durch bewusste Subtraktion zweier Messergebnisse zu verschiedenen Messpunkten.

Die Aufgabe der Erfindung besteht in der Realisierung eines Laserdistanzhandmessgerätes mit einem, eine weitere Grundmessaufgabe unmittelbar unterstützendes, Extremwertmessverfahren.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen wird bei einem Extremwertmessverfahren eines Laserdistanzhandmessgerätes in einem ersten Schritt ein Eingabemittel betätigt, das eine Messfolge auslöst, während welcher in einem zweiten Schritt vom Laserdistanzhandmessgerät ausgelöste Einzelmessungen von Distanzen erfolgen und in einem dritten Schritt vom Laserdistanzhandmessgerät aus den Einzelmessungen zumindest ein Maximalwert bzw. Minimalwert bezüglich der Messfolge bestimmt wird, wobei vom Laserdistanzhandmessgerät aus zumindest einem Minimalwert und zumindest einem Maximalwert eine Extremwertdifferenz bezüglich der Messfolge berechnet wird.

Durch die automatische Berechnung der Extremwertdifferenz, welche angezeigt und/oder weiterverarbeitet wird, sind unmittelbar sowie unter Ausschluss einer fehleranfälligen, bewussten Handlungsabfolge weitere Grundmessaufgaben vom Laserdistanzhandmessgerät erfüllbar.

Vorteilhaft wird im dritten Schritt nach der Berechnung vom Laserdistanzhandmessgerät die Messfolge erweitert und ab dem zweiten Schritt fortgesetzt, wodurch das momentane Minimalwert, das momentane Maximalwert und die momentane Extremwertdifferenz periodisch wiederholt neu berechnet werden.

Vorteihaft erfolgen im zweiten Schritt während der Durchführung der Messfolge vom Laserdistanzhandmessgerät ausgelöste Einzelmessungen der Distanzen zu mehreren, verschiedenen Messpunkten längs eines Messpfades.

Indem vorteilhaft im zweiten Schritt bei einer, der Grundmessaufgabe im Baugewerbe zugeordnete, zweckentsprechenden Nutzung des Laserdistanzhandmessgerätes der Messpfad zumindest teilweise eine Fläche sowie ein vor dieser Fläche angeordnetes Objekt überstreicht, erfolgt unmittelbar die Messung der relativen Lage von Objekten zu Flächen, bspw. des Abstandes einer Verkleidung vor einer Decke. Der erforderliche Messpfad kann sowohl durch leichtes Verschwenken der Winkellage der Hand mit dem Laserdistanzhandmessgerät oder durch ein paralleles Versetzen des Laserdistanzhandmessgerätes längs des Pfades bspw. durch Verschieben auf einer Referenzfläche oder durch eine Kombination dieser Abläufe erfolgen.

Vorteilhaft wird in einem weiteren Schritt die berechnete Extremwertdifferenz direkt auf einem Anzeigemittel angezeigt, weiter vorteilhaft zusammen mit dem Minimalwert und dem Maximalwert.

Vorteilhaft wird in einem weiteren Schritt die Extremwertdifferenz als Parameter einer weiteren Grundmessaufgabe verwendet, bspw. zur Bestimmung eines Extremums einer Vielzahl von Extremwertdifferenzen.

Vorteilhaft erfolgt im dritten Schritt über eine Analyse der Einzelmessungen eine Plausibilitätsprüfung, bspw. ob die Einzelmessungen innerhalb genau zweier, hinreichend scharf begrenzter, Distanzbereiche verteilt sind, wodurch zu Messfehlern führende, von der Flächennormale abweichende Neigungen erkannt und mit der Ausgabe eines Fehlerhinweises bzw. zugeordneten Fehlertoleranzbereiches quittiert werden.

Ein diese weitere Grundmessaufgabe unmittelbar unterstützendes, zugeordnetes Laserdistanzhandmessgerät weist ein Eingabemittel zur Aktivierung des Extremwertmessverfahrens zur gemeinsamen Ermittlung sowohl des Minimalwerts als auch des Maximalwerts der Distanz einer Messfolge auf, wodurch keine weiteren Handlungen vom Nutzer vorgenommen werden müssen.

Vorteilhaft weist das Anzeigemittel eine direkte Anzeige der Extremwertdifferenz auf, wodurch diese unmittelbar ablesbar ist.

Die Erfindung wird bezüglich eines vorteilhaften Ausführungsbeispiels näher erläutert mit:
- Fig. 1: als Laserdistanzhandmessgerät
- Fig. 2: als Grundmessaufgabe
- Fig. 3: als Variante zur Grundmessaufgabe

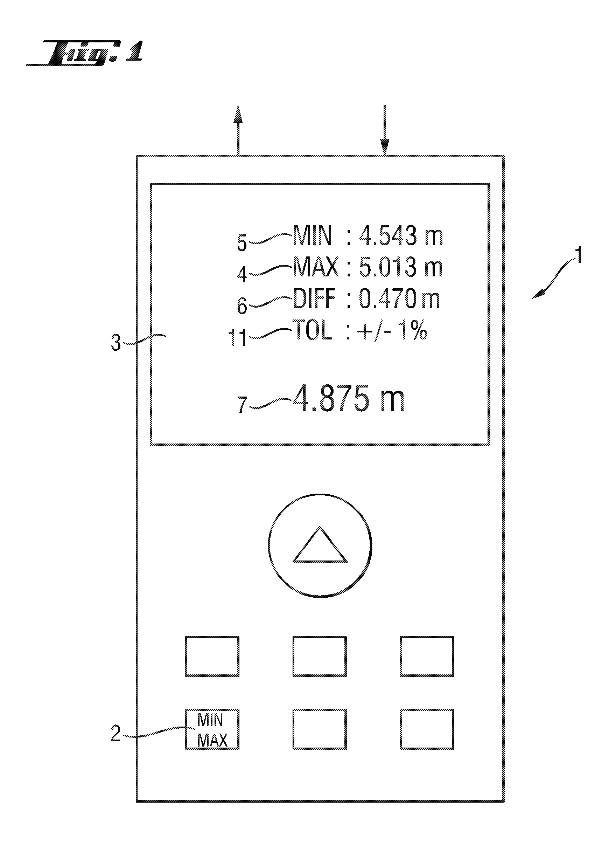

Nach Fig. 1 ist ein Laserdistanzhandmessgerät 1 mit der erfindungsgemässen Zusatzfunktion dargestellt, welche ein integrierter Mikrocontroller automatisch ausführt. Dabei wird diese Zusatzfunktion mit einem Eingabemittel 2 in Form einer Messfolgetaste Min/Max aktiviert. Das Laserdistanzhandmessgerät 1 schaltet dann in den kontinuierlichen Messmodus, bei dem ständig Distanzmessungen mit hoher Messrate durchgeführt werden. Während dieser Messmodus aktiv ist, wird im Anzeigemittel 3 gleichzeitig der Maximalwert 4, der Minimalwert 5 und die Extremwertdifferenz 6 zwischen Maximalwert 4 und Minimalwert 5 angezeigt. Die untere grosse Anzeige stellt die aktuelle Einzelmessdistanz 7 dar. In diesem Beispiel beträgt die Distanz zur Raumdecke (Maximalwert) 5.013 m. Die Distanz zum Rohr (Minimalwert) beläuft sich auf 4.543 m, und der Abstand des Rohrs zur Raumdecke (Extremwertdifferenz) beträgt 0.47 m. Die aktuelle Einzelmessdistanz 7 beträgt 4.875 m. Im Fehlerfall wird der Anwender über das Anzeigemittel 3 bezüglich einer Fehlertoleranz 11 informiert.

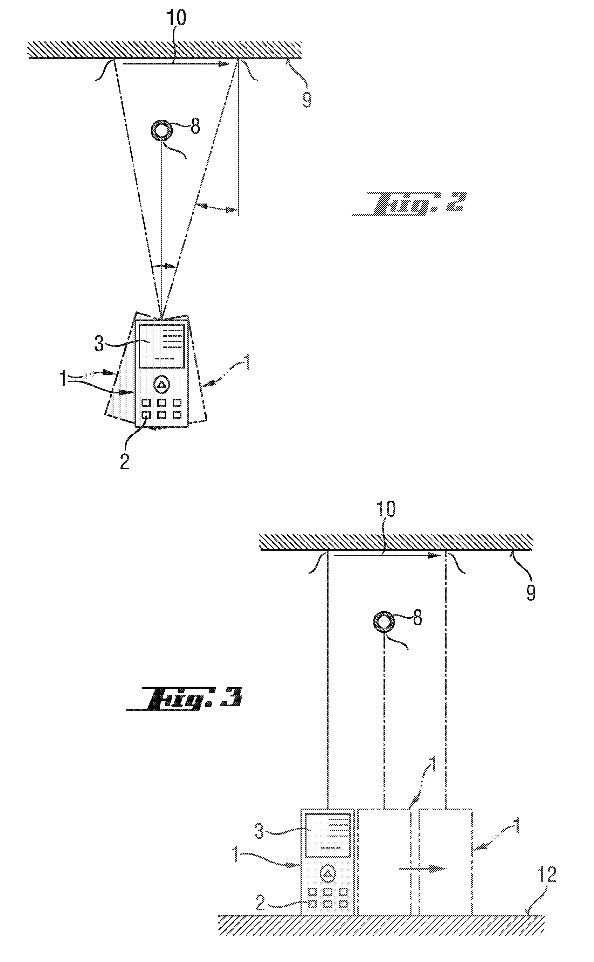

Die Grundmessaufgabe ist in den Fig. 2 und Fig. 3 dargestellt. Wenn beispielsweise der Anwender den Abstand eines Objektes 8 in Form eines Rohres relativ zu einer Fläche 9 unter einer Raumdecke messen möchte, so kann er einfach und ohne genaues Anzielen den Lasermessfleck des Laserdistanzhandmessgerätes 1 bei aktivierter Zusatzfunktion Min/Max entlang eines Messpfades 10 über das Rohr von der Position I über die Position II zu der Position III bewegen. Dabei kann er das Laserdistanzhandmessgerät 1 gemäss Fig. 2 in der Hand um einen Referenzpunkt verkippen oder gemäss Fig. 3 linear entlang einer Referenzfläche 12 verschieben. Bei der Verkippung ist auf einen kleinen Kippwinkel α zu achten, um den Messfehler gering zu halten. Durch eine Analyse der vielen Einzelmesswerte kann die Software des Laserdistanzhandmessgerätes 1 kontrollieren ob ein kleiner Kippwinkel α vorliegt.

## Patentansprüche

1. Extremwertmessverfahren eines Laserdistanzhandmessgerätes (1), wobei in einem ersten Schritt ein Eingabemittel (2) betätigt wird, das eine Messfolge auslöst, während welcher in einem zweiten Schritt vom Laserdistanzhandmessgerät (1) ausgelöste Einzelmessungen von Distanzen erfolgen und in einem dritten Schritt vom Laserdistanzhandmessgerät (1) aus den Einzelmessungen zumindest ein Maximalwert (4) bzw. Minimalwert (5) bezüglich der Messfolge bestimmt wird, **dadurch gekennzeichnet, dass** vom Laserdistanzhandmessgerät (1) aus zumindest einem Minimalwert (5) und zumindest einem Maximalwert (4) eine Extremwertdifferenz (6) bezüglich der Messfolge berechnet wird.

2. Extremwertmessverfahren nach Anspruch 1, **dadurch gekennzeichnet, dass** im dritten Schritt nach der Berechnung vom Laserdistanzhandmessgerät die Messfolge erweitert und mit dem zweiten Schritt fortgesetzt wird.

3. Extremwertmessverfahren nach Anspruch 1 oder 2, **dadurch gekennzeichnet, dass** im zweiten Schritt während der Durchführung der Messfolge vom Laserdistanzhandmessgerät (1) ausgelöste Einzelmessungen der Distanzen zu mehreren, verschiedenen Messpunkten längs eines Messpfades (10) erfolgen.

4. Extremwertmessverfahren nach Anspruch 3, **dadurch gekennzeichnet, dass** im zweiten Schritt der Messpfad (10) zumindest teilweise eine Fläche (9) sowie ein vor dieser Fläche (9) angeordnetes Objekt (8) überstreicht.

5. Extremwertmessverfahren nach einem der vorherigen Ansprüche, **dadurch gekennzeichnet, dass** in einem weiteren Schritt die berechnete Extremwertdifferenz (6) direkt auf einem Anzeigemittel (3) angezeigt wird.

6. Extremwertmessverfahren nach einem der vorherigen Ansprüche, **dadurch gekennzeichnet, dass** in einem weiteren Schritt die Extremwertdifferenz (6) als Parameter einer weiteren Grundmessaufgabe verwendet wird.

7. Extremwertmessverfahren nach einem der vorherigen Ansprüche, **dadurch gekennzeichnet, dass** im dritten Schritt über eine Analyse der Einzelmessungen eine Plausibilitätsprüfung erfolgt.

8. Extremwertmessverfahren nach Anspruch 7, **dadurch gekennzeichnet, dass** in Abhängigkeit der Plausibilitätsprüfung auf einem Anzeigemittel (3) ein Hinweis oder eine Fehlertoleranz (11) angezeigt wird.

9. Laserdistanzhandmessgerät zur Durchführung des Extremwertmessverfahrens nach einem der vorherigen Ansprüche, **dadurch gekennzeichnet, dass** es ein Eingabemittel (2) zur Aktivierung des Extremwertmessverfahrens zur gemeinsamen Ermittlung sowohl des Minimalwerts (5) als auch des Maximalwerts (4) der Distanz einer Messfolge aufweist.

10. Laserdistanzhandmessgerät nach Anspruch 9, **dadurch gekennzeichnet, dass** das Anzeigemittel (3) eine direkte Anzeige der Extremwertdifferenz (6) aufweist.

11. Laserdistanzhandmessgerät nach Anspruch 9 oder 10, **dadurch gekennzeichnet, dass** das Anzeigemittel (3) eine direkte Anzeige des Minimalwerts (5) und des Maximalwerts (4) aufweist.
